(19) Europäisches Patentamt
European Patent Office
Office européen des brevets

(11) Veröffentlichungsnummer: **0 228 657 B1**

(12) **EUROPÄISCHE PATENTSCHRIFT**

(45) Veröffentlichungstag der Patentschrift: **16.03.94**

(51) Int. Cl.$^5$: **C08K 5/54**, C04B 26/02

(21) Anmeldenummer: **86117587.5**

(22) Anmeldetag: **17.12.86**

Die Akte enthält technische Angaben, die nach dem Eingang der Anmeldung eingereicht wurden und die nicht in dieser Patentschrift enthalten sind.

# (54) In Wasser redispergierbare, wasserlösliches Polymer und mindestens eine organische Siliciumverbindung enthaltende Pulver, Verfahren zu ihrer Herstellung und Verwendung solcher Pulver.

(30) Priorität: **19.12.85 DE 3545030**

(43) Veröffentlichungstag der Anmeldung:
**15.07.87 Patentblatt 87/29**

(45) Bekanntmachung des Hinweises auf die Patenterteilung:
**16.03.94 Patentblatt 94/11**

(84) Benannte Vertragsstaaten:
**AT BE CH DE FR GB IT LI NL SE**

(56) Entgegenhaltungen:
**EP-A- 0 056 622**
**GB-A- 892 787**
**US-A- 3 210 208**

(73) Patentinhaber: **WACKER-CHEMIE GMBH**
**Hanns-Seidel-Platz 4**
**D-81737 München(DE)**

(72) Erfinder: **Eck, Herbert, Dr.Dipl.-Chem.**
**Burg 11**
**D-8263 Burghausen(DE)**
Erfinder: **Roth, Michael, Dr.Dipl.-Chem.**
**Orffstrasse 11**
**D-8263 Burghausen(DE)**

**EP 0 228 657 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es kann beispielsweise erwünscht sein, hydraulische Bindemittel schon vor ihrer Auslieferung an den Endverbraucher im noch trockenen Zustand mit organischen Siliciumverbindungen ohne großen Aufwand vermischen zu können, ohne daß beim Endverbraucher die Weiterverarbeitung der Bindemittel durch einen Gehalt an derartigen Siliciumverbindungen gestört wird. Es bestand beispielsweise aus dem vorstehend angegebenen Grund die Aufgabe, in Wasser redispergierbare, mindestens eine organische Siliciumverbindung enthaltende Pulver bereitzustellen, wobei mindestens 50 Gewichtsprozent der zu Herstellung dieser Pulver verwendeten organischen Siliciumverbindung(en) bei Raumtemperatur und 1020 hPa (abs.) flüssig oder fest sind und direkt an Silicium gebundenen Wasserstoff und/oder kondensationsfähige Gruppen aufweisen und diese Pulver mindestens 30 Gewichtsprozent, bezogen auf ihr Gewicht, organische Siliciumverbindung enthalten. Diese Aufgabe wird durch die Erfindung gelöst.

Gegenstand der Erfindung sind in Wasser redispergierbare Pulver, erhältlich durch Sprühtrocknung wäßriger Mischungen, wobei die Mischungen

a) mindestens 30 Gewichtsprozent, bezogen auf das Gesamtgewicht des jeweiligen wasserfreien Pulvers, organische Siliciumverbindung bestehend aus mindstens einer organischen Siliciumverbindung, wobei mindestens 50 Gewichtsprozent der organischen Siliciumverbindung bei Raumtemperatur und 1020 hPa (abs.) flüssig oder fest sind, einen Siedepunkt von mindestens 150 °C bei 1020 hPa (abs.), durchschnittlich höchstens 1,8 SiC-gebundene organische Reste je Siliciumatom und je Molekül mindestens ein direkt an Silicium gebundenes Wasserstoffatom oder mindestens eine direkt an Silicium gebundene Hydroxylgruppe oder mindestens einen über Sauerstoff an Silicium gebundenen Kohlenwasserstoffrest, der durch eine Alkoxygruppe substituiert sein kann, oder ein Gemisch aus mindestens zwei derartigen kondensationsfähigen Substituenten aufweisen, und

b) 5 bis 50 Gewichtsprozent, bezogen auf das Gesamtgewicht der organischen Siliciumverbindung, wasserlösliches Polymer enthalten.

In Wasser redispergierbare, wasserlösliches Polymer und organische Siliciumverbindung enthaltende Pulver sind aus US-3 210 208 (ausgegeben 5. Oktober 1965, G.M. Grass et al., Smith Kline & French Laboratories) bereits bekannt. Diese Druckschrift erwähnt jedoch keine organischen Siliciumverbindungen mit kondensationsfähigen Atomen bzw. Gruppen.

Aus EP-PS 53 223 (veröffentlicht 9. Juni 1982, M. Roth et al., Wacker-Chemie GmbH) sind bereits auch Gemische aus wasserlöslichem Polymer und organischer Siliciumverbindung mit kondensationsfähigen Gruppen bekannt. Diese Druckschrift erwähnt jedoch keine Sprühtrocknung.

Die beiden vorstehend genannten Druckschriften konnten den Gegenstand der Erfindung auch nicht nahelegen, weil nicht zu erwarten war, daß bei den bei der Sprühtrocknung angewendeten verhältnismäßig hohen Temperaturen trotz der Anwesenheit von Wasser bei Einsatz von Verbindungen mit kondensierbaren und teilweise auch hydrolysierbaren Substituenten noch brauchbare Produkte erhalten werden würden.

Gegenstand der Erfindung ist weiterhin ein Verfahren zur Herstellung von in Wasser redispergierbaren, wasserlösliches Polymer und mindestens eine organische Siliciumverbindung enthaltenden Pulvern durch Sprühtrocknung, wobei Emulsionen oder Suspensionen von organischer Siliciumverbindung, die zu mindestens 50 Gewichtsprozent aus solcher organischer Siliciumverbindung besteht, die bei Raumtemperatur und 1020 hPa (abs.) flüssig oder fest ist, einen Siedepunkt von mindestens 150 °C bei 1020 hPa (abs.), durchschnittlich höchstens 1,8 SiC-gebundene organische Reste je Siliciumatom und je Molekül mindestens ein direkt an Silicium gebundenes Wasserstoffatom oder mindestens eine direkt an Silicium gebundene Hydroxylgruppe oder mindestens einen über Sauerstoff an Silicium gebundenen Kohlenwasserstoffrest, der durch eine Alkoxygruppe substituiert sein kann, oder ein Gemisch aus mindestens zwei derartiger kondensationsfähiger Substituenten aufweist, in Wasser, das wasserlösliches Polymer enthält, wobei die Menge von in Wasser dispergierter organischer Siliciumverbindung insgesamt mindestens 30 Gewichtsprozent, bezogen auf das Gesamtgewicht der im Wasser verteilten, bei 1020 hPa (abs.) und Temperaturen unter 150 °C nicht-siedenden Stoffe, beträgt, und wobei wasserlösliches Polymer in Mengen von 5 bis 50 Gewichtsprozent, bezogen auf das Gewicht von zur Herstellung des jeweiligen Pulvers eingesetzter Organosiliciumverbindung verwendet wird, in an sich bekannter Weise sprühgetrocknet werden.

Als wasserlösliche Polymere sind durch Verseifung von Polyvinylacetat hergestellte Polyvinylalkohole mit einem Hydrolysegrad von 70 bis 99,5 Molprozent, vorzugsweise 80 bis 99 Molprozent, insbesondere 80 bis 90 Molprozent und einem viskosimetrisch ermitteltem Molekulargewicht von 15 000 bis 100 000 bevorzugt. Weitere Beispiele für wasserlösliche Polymere, die zur Herstellung der erfindungsgemäßen Pulver oder bei dem erfindungsgemäßen Verfahren eingesetzt werden können, sind Vinylpyrrolidon-Polymere, insbesondere Polyvinylpyrrolidone mit einem Molekulargewicht von 5000 bis 400 000, Stärken und Stärkederivate, wie hydroxyalkylierte Stärken, phosphatierte Stärken, sulfatierte Stärken, Stärken, die

sowohl phosphatiert als auch sulfatiert sind, Carboxymethylstärken, abgebaute Stärken, z.B. Dextrine, wasserlösliche Polyacrylate, wasserlösliche Polymethacrylate, wasserlösliche Poly(meth)-acrylamide, Polymaleinate, Polyvinylsulfonate, wasserlösliche Celluloseether, wie Carboxymethylcellulosen, Hydroxyalkylcellulosen, Methylcellulosen, Cellulosemischether sowie wasserlösliche Proteine, wie Casein, Sojaproteine und Gelatine.

Die erfindungsgemäßen Pulver können eine Art von wasserlöslichem Polymer oder mindestens zwei verschiedene Arten von wasserlöslichem Polymer enthalten. Ebenso kann bei dem erfindungsgemäßen Verfahren eine Art von wasserlöslichem Polymer oder ein Gemisch aus mindestens zwei verschiedenen Arten von wasserlöslichem Polymer eingesetzt werden.

Wasserlösliches Polymer wird vorzugsweise in Mengen von 5 bis 15 Gewichtsprozent, bezogen auf das Gewicht von zur Herstellung des jeweiligen Pulvers eingesetzter Organosiliciumverbindung, verwendet.

Die zur Herstellung der erfindungsgemäßen Pulver oder bei dem erfindungsgemäßen Verfahren verwendeten organischen Siliciumverbindungen können beispielsweise solche der Formel

$R_aSi(OR^1)_{4-a}$

sein, wobei R einen einwertigen Kohlenwasserstoffrest, der mindestens einen gegenüber Wasser bei der jeweiligen Trocknungstemperatur inerten Substituenten aufweisen kann, $R^1$ gleiche oder verschiedene Alkyl- oder Alkoxyalkylenreste mit jeweils 1 bis 4 Kohlenstoffatomen je Rest und a 0 oder 1 bedeutet mit der Maßgabe, daß derartige Silane einen Siedepunkt von mindestens 150 °C bei 1020 hPa (abs.) aufweisen. Diese Silane können im Gemisch mit Silanen der Formel

$R_bSi(OR^1)_{4-b}$

vorliegen, wobei R und $R^1$ jeweils die oben dafür angegebene Bedeutung haben und b 2 oder 3 ist mit der Maßgabe, daß der Durchschnittswert von a und b höchstens 1,8 ist und daß der Siedepunkt derartiger Gemische mindestens 150 °C bei 1020 hPa (abs.) beträgt.

Die zur Herstellung der erfindungsgemäßen Pulver oder bei dem erfindungsgemäßen Verfahren verwendeten organischen Siliciumverbindungen können beispielsweise auch Teilhydrolysate der vorstehend genannten Silane bzw. Silangemische oder Organo(poly)siloxane aus Einheiten der Formel

$$R_cH_dSi(OR^1)_e(OH)_fO_{\frac{4-c-d-e-f}{2}}$$

sein, worin R und $R^1$ jeweils die oben dafür angegebene Bedeutung haben, c 0,1,2 oder 3, durchschnittlich 0 bis 1,8, d 0 oder 1, durchschnittlich 0 bis 1, e 0, 1, 2 oder 3, durchschnittlich 0,01 bis 2,0 und f 0, 1, 2 oder 3, durchschnittlich 0,00 bis 0,5 ist mit der Maßgabe, daß die Summe von c + d + e + f je Einheit höchstens 3,5 ist.

Die zur Herstellung der erfindungsgemäßen Pulver oder bei dem erfindungsgemäßen Verfahren verwendeten organischen Siliciumverbindungen können beispielsweise auch durch Trimethylsiloxygruppen endblockierte Methylhydrogenpolysiloxane oder durch Trimethylsiloxygruppen endblockierte Mischpolymere aus Dimethylsiloxan- und Methylhydrogensiloxoneinheiten sein.

Vorzugsweise enthalten die organischen Reste R höchstens 18 Kohlenstoffatome je Rest. Beispiele für Kohlenwasserstoffreste R sind Alkylreste, wie der Methyl-, Ethyl-, n-Propyl-, Isopropyl- und 2-Ethylhexylrest sowie Hexyl- und Octadecylreste; Kohlenwasserstoffreste mit mindestens einer aliphatischen Kohlenstoff-Kohlenstoff-Doppelbindung, wie der Vinyl-, Allyl-, Ethylallyl- und Butadienylrest; Cycloalkylreste, wie der Cyclohexylrest; Arylreste, wie der Phenylrest; Alkarylreste, wie Tolylreste; und Aralkylreste, wie der Benzylrest.

Beispiele für substituierte Kohlenwasserstoffreste R sind halogenierte Kohlenwasserstoffreste, wie der 3,3,3-Trifluorpropylrest und 3-Chlorpropylrest sowie Chlorphenylreste; Mercaptoalkylreste, wie der 3-Mercaptopropylrest; und Acyloxyalkylreste, wie der 3-Methacryloxypropylrest.

Beispiele für Alkylreste $R^1$ sind der Methyl-, Ethyl-, n-Propyl-, Isopropyl-, n-Butyl-, sec.-Butyl- und tert.-Butylrest. Das wichtigste Beispiel für einen Alkoxyalkylenrest ist der Methoxyethylenrest.

Einzelne Beispiele für zur Herstellung der erfindungsgemässen Pulver oder bei dem erfindungsgemäßen Verfahren verwendbare organische Siliciumverbindungen sind 3-Mercaptopropyltrimethoxysilan, Vinyltris-(methoxyethylenoxy)-silan, 3-Methacrylpropyltris-(methoxyethylenoxy)-silan, n-Octyltriethoxysilan, 2-Ethylhexyltrimethoxysilan, Polyethylsilikate, das Organopolysiloxan der Summenformel

$CH_3\ Si(OC_2H_5)_{0,8}0_{1,1}$

mit einem durchschnittlichen Molekuargewicht von etwa 600 g/Mol und einer Viskosität von etwa 20 $mm^2.s^{-1}$ bei 25 ° C das Organopolysiloxan der Summenformel

$CH_3\ Si(OCH_3)_{0,8}0_{1,1}$

mit einem durchschnittlichen Molekulargewicht von etwa 650 g/Mol und einer Viskosität von etwa 30 $mm^2.s^{-1}$ bei 25 ° C, das Organopolysiloxan der Summenformel

$C_6H_5Si(OC_2H_5)_{0,72}0_{1,14}$

mit einem durchschnittlichen Molekulargewicht von etwa 3000 g/Mol und einer Viskosität von etwa 25 000 $mm^2.s^{-1}$ bei 25 ° C,
das Organosiloxan der Formel

$R^2Si(OCH_3)_2 0_{0,5}$ ,

worin 70 % der Anzahl der Reste $R^2$ Methylgruppen und 30 % der Anzahl der Reste $R^2$ 2-Ethylhexylgruppen sind, und ein durch Trimethylsiloxygruppen endblockiertes Methylhydrogenpolysiloxan mit einer Viskosität von etwa 20 $mm^2.s^{-1}$ bei 25 ° C.

Die erfindungsgemäßen Pulver können eine Art von organischer Siliciumverbindung oder mindestens zwei verschiedene Arten von organischer Siliciumverbindung enthalten. Ebenso kann bei dem erfindungsgemäßen Verfahren eine Art von organischer Siliciumverbindung oder ein Gemisch aus mindestens zwei verschiedenen Arten von organischen Siliciumverbindungen eingesetzt werden.

Wenn eine Hydrophobierung der erfindungsgemäßen oder erfindungsgemäß hergestellten Pulver erwünscht ist, so muß mindestens ein Teil der organischen Siliciumverbindungen durchschnittlich mindestens 0,8 SiC-gebundene, gegebenenfalls halogenierte Kohlenwasserstoffreste je Siliciumatom aufweisen.

Vorzugsweise werden zur Herstellung der erfindungsgemäßen Pulver oder bei dem erfindungsgemäßen Verfahren insgesamt 70 bis 95 Gewichtsprozent, jeweils bezogen auf das Gesamtgewicht des jeweiligen Pulvers (berechnet als wasserfreies Pulver), organische Siliciumverbindung eingesetzt.

Zusätzlich zu organischer Siliciumverbindung und wasserlöslichem Polymer können die erfindungsgemäßen Pulver gegebenenfalls weitere Stoffe enthalten und bei dem erfindungsgemäßen Verfahren gegebenenfalls weitere Stoffe mitversprüht werden, jedoch nur in Mengen, die gewährleisten, daß die fertigen Pulver, bezogen auf das Gesamtgewicht des jeweiligen Pulvers (berechnet als wasserfreies Pulver), insgesamt noch mindestens 30 Gewichtsprozent organische Siliciumverbindung enthalten. Beispiele für solche weiteren Stoffe sind bzw. können sein mit Wasser mischbare Lösungsmittel, wie Diacetonalkohol, mit Wasser nicht mischbare Lösungsmittel, wie Gemische aus Xylolisomeren, andere ionogene oder nichtionogene Emulgatoren als wasserlösliche Polymere, wie Natriumlaurylsulfat, Fungicide, Antischaummittel, lösliche Farbstoffe, Pigmente, Füllstoffe mit einer Oberfläche von mindestens 50 $m^2/g$, wie pyrogen erzeugtes Siliciumdioxyd und Füllstoffe mit einer Oberfläche von weniger als 50 $m^2/g$, wie Kreidepulver, nadelförmiges Calciumcarbonat und Quarzmehl.

In den zu versprühenden Gemischen beträgt die Menge von Wasser vorzugsweise 45 bis 95 Gewichtsprozent, insbesondere 60 bis 85 Gewichtsprozent, jeweils bezogen auf das Gesamtgewicht des jeweiligen zu versprühenden Gemisches.

Die Sprühtrocknung kann in beliebigen zur Sprühtrocknung von Flüssigkeiten geeigneten und bereits vielfach bekannten Vorrichtungen, beispielsweise solchen mit mindestens einer Drallzerstäuberdüse oder mit einer rotierenden Zerstäuberscheibe, in einem vorzugsweise erwärmten Trockengasstrom durchgeführt werden.

Vorzugsweise beträgt die Eintrittstemperatur des Trockengasstroms, wobei es sich meist um Luft handelt, 80 ° bis 250 ° C, insbesondere 110 ° bis 190 ° C und die Austrittstemperatur des beim Trocknen gebildeten Gasstroms 40 ° bis 100 ° C, insbesondere 50 ° bis 90 ° C.

Getrennt von dem der Sprühtrocknung zugeführten Gemisch können in die Vorrichtung, in der die Sprühtrocknung stattfindet, Antiblock-(Antiback)-mittel eingeführt werden, jedoch selbstverständlich wieder nur in Mengen, die gewährleisten, daß die fertigen Pulver, bezogen auf das Gesamtgewicht des jeweiligen

Pulvers (berechnet als wasserfreies Pulver, insgesamt noch mindestens 30 Gewichtsprozent organische Siliciumverbindung enthalten. Dabei sind Mengen derartiger Antiblockmittel von 1 bis 20 Gewichtsprozent, bezogen auf das Gesamtgewicht von jeweils verwendeter organischer Siliciumverbindung, bevorzugt, wenn Antiblockmittel mitverwendet werden. Die Antiblockmittel sind meist anorganische, feste Stoffe mit mittleren Teilchengrößen von 0,01 bis 50 mikrometer. Es kann sich dabei z.B. um Aluminiumsilikate, kolloidales Siliciumdioxydgel, pyrogen erzeugtes Siliciumdioxyd, gemahlene Tone, Leichtspat, Talkum, Zemente, Kreidepulver oder Diatomeenerde handeln.

Die erfindungsgemäßen oder erfindungsgemäß hergestellten Pulver können im trockenen Zustand oder in mit Wasser verdünnter Form beispielsweise mit hydraulischen Bindemitteln, wie Zement oder Kalk und Zuschlagstoffen zur Herstellung von Bausteinen oder Bauteilen, wie Beton, einschließlich Gasbeton oder Schaumbeton oder Kalksandsteinen, sowie mit Putzen, Lehm, Füllstoffen, wie Siliciumdioxyd oder Kaolin, oder Anstrichfarben vermischt werden. Sie können in mit Wasser verdünnter Form zur Hydrophobierung von Schüttgütern, wie Perliten (Blählava), Vermiculiten (Blähglimmer), Gasbetongranulaten und Holzwolle oder Holzmehl verwendet werden. Weiterhin können die erfindungsgemäßen oder erfindungsgemäß hergestellten Pulver in mit Wasser verdünnter Form als Bindemittel für feinteilige anorganische Stoffe, wie Sand, oder organische Stoffe, wie Holzmehl, verwendet werden. Schließlich können die erfindungsgemäßen oder erfindungsgemäß hergestellten Pulver z.B. auch als Zusätze für Klebstoffe oder zur Schaumverhütung oder Schaumbekämpfung in wäßrigen Medien verwendet werden.

In den folgenden Beispielen beziehen sich alle Angaben von Prozentsätzen und Teilen auf das Gewicht, soweit nichts anderes angegeben ist.

Beispiel 1

250 g des im Handel erhältlichen Organopolysiloxans der Summenformel

$CH_3Si(OC_2H_5)_{0,8}O_{1,1}$

mit einem durchschnittlichen Molekulargewicht von etwa 600 und einer Viskosität von etwa 20 $mm^2s^{-1}$ bei 25 °C und 496 g einer 10 %igen, wäßrigen Lösung eines Polyvinylalkohols mit einem Hydrolysegrad von 87,5 Molprozent und einem Molekulargewicht von 25 000, wobei eine 4 %ige wäßrige Lösung dieses Polyvinylalkohols bei 20 °C eine Viskosität von 5 mPa.s hat, werden vermischt.

Die so erhaltene Mischung wird mit weiteren 250 g des vorstehend beschriebenen Organopolysiloxans vermischt. Das so erhaltene Gemisch wird mit soviel Wasser verdünnt, daß die Auslaufzeit 30 Sekunden im DIN (Deutsche Industrie-Norm)-Becher 4 beträgt und dann in einem mit einer Drallzerstäuberdüse arbeitenden Sprühtrockner (Nubilosa AJM 014, wobei es sich bei der Bezeichnung "Nubilosa" um ein registriertes Warenzeichen handeln dürfte) bei einem Düsendruck von 4000 hPa (abs.) und einem Durchsatz von 2 l/Stunde, sprühgetrocknet, wobei die Lufteintrittstemperatur 175 °C und die Gasaustrittstemperatur 85 °C beträgt. Es wird ein in Wasser redispergierbares, gut rieselfähiges Pulver mit einem Restfeuchte-Gehalt von 2,1 % erhalten.

Beispiel 2

Die im Beispiel 1 beschriebene Arbeitsweise wird wiederholt mit den Abänderungen, daß bei der Sprühtrocknung der Düsendruck 5400 hPa (abs.) und die Lufteintrittstemperatur 165 °C beträgt. Es wird ein in Wasser redispergierbares, gut rieselfähiges Pulver mit einem Restfeuchte-Gehalt von 1,3 % erhalten.

Beispiel 3

250 g des in Beispiel 1 näher beschriebenen Organopolysiloxans werden mit 765 g einer 16,25 %-igen wäßrigen Lösung eines Polyvinylalkohols mit einem Hydrolysegrad von 81 Molprozent und einem Molekulargewicht von 26 000, wobei eine 4 %-ige wäßrige Lösung dieses Polyvinylalkohols bei 20 °C eine Viskosität von 5 mPa.s hat, vermischt. Die so erhaltene Mischung wird mit weiteren 250 g des in Beispiel 1 näher beschriebenen Organopolysiloxans vermischt. Das so erhaltene Gemisch wird mit 250 g Wasser vermischt. Seine Auslaufzeit beträgt dann 15 Sekunden im DIN-Becher 4. Die so erhaltene Emulsion wird schließlich, wie in Beispiel 2 angegeben, in ein in Wasser redispergierbares, gut rieselfähiges Pulver mit einem Restfeuchte-Gehalt von 1,7 % umgewandelt.

Beispiel 4

Die in Beispiel 3 beschriebene Arbeitsweise wird wiederholt mit der Abänderung, daß die Konzentration der Lösung des gleichen Polyvinylalkohols nicht 16,25 %, sondern nur 13,66 % beträgt. Es wird ein in Wasser redispergierbares, gut rieselfähiges Pulver mit einem Restfeuchte-Gehalt von 1,8 % erhalten. Gemische aus folgenden pulverförmigen Bestandteilen:

45 Teile Dolomit
15 Teile Titandioxyd
32 Teile Schwerspat
4 Teile Eisenoxydrot
4 Teile Eisenoxydgelb

werden zunächst mit 1 %, bezogen auf ihr Gewicht, redispergierbarem Pulver und dann mit 125 %, bezogen auf ihr Gewicht, einer 25 %-igen wäßrigen Lösung von Kaliwasserglas (Molverhältnis $SiO_2$ : $K_2O$ = 3,8) vermischt. Künstlich hergestellte Kalksandsteine werden mit den so erhaltenen Wasserglasfarben allseitig bestrichen, 8 Tage bei Raumtemperatur trocknen gelassen und dann gewogen. Dann werden sie unter Wasser von 20 °C gelegt, wobei die Wasseroberfläche 5 cm über der dieser Oberfläche am nächsten liegenden Seite liegt. Nach verschiedenen, in der Tabelle I angegebenen Zeiten werden die Steine aus dem Wasser herausgenommen und nach dem Abtropfen-lassen von nur lose anhaftendem Wasser erneut gewogen.

Die Ergebnisse dieser Prüfung sind in der folgenden Tabelle I angegeben. Dabei stellt der mit "S-Wert" bezeichnete Wert die Summe der Wasseraufnahmewerte in jeder Reihe der Tabelle dar. Je niedriger der S-Wert ist, desto langsamer erfolgt die Wasseraufnahme.

Tabelle I

| Pulver hergestellt nach | Wasseraufnahme in kg/m² nach Stunden | | | | | | | |
|---|---|---|---|---|---|---|---|---|
| Beispiel | 0,5 | 1 | 2 | 3 | 5 | 7 | 24 | S-Wert |
| 1 | 0,12 | 0,20 | 0,33 | 0,45 | 0,70 | 0,93 | 2,66 | 5,39 |
| 2 | 0,14 | 0,25 | 0,42 | 0,60 | 0,91 | 2,10 | 3,56 | 7,08 |
| 3 | 0,13 | 0,18 | 0,31 | 0,42 | 0,60 | 0,82 | 2,34 | 4,79 |
| 4 | 0,11 | 0,14 | 0,19 | 0,23 | 0,36 | 0,45 | 1,23 | 2,70 |
| kein Pulver | 1,45 | 2,13 | 3,06 | 3,90 | 5,45 | 6,67 | 11,47 | 34,12 |
| unbehandelte Steine | 4,03 | 5,36 | 7,06 | 8,47 | 10,54, | 11,20 | 11,20 | 58,06 |

Beispiele 5 bis 15

Aus den in der folgenden Tabelle II angegebenen Stoffen und soviel Wasser, daß die Gemische eine Auslaufzeit von 13 bis 15 Sekunden im DIN-Becher 4 haben, werden Gemische hergestellt, deren pH-Wert mit $NaHCO_3$ auf 7,0 eingestellt wird und die dann in dem Sprühtrockner der in Beispiel 1 angegebenen Art bei einer Lufteintrittstemperatur von 165 °C und einer Gas austrittstemperatur von 85 °C und den in der folgenden Tabelle II angegebenen Düsendrücken versprüht werden. Es werden jeweils in Wasser redispergierbare, gut rieselfähige Pulver erhalten.

Tabelle II

| Beispiel | Siliciumverbindung | Wasserlösliches Polymer: Art | Menge 1) Gew.-% | Hydrolysegrad Mol-% | Molekulargewicht g/Mol | 2) % | Düsendruck hPa(abs.) |
|---|---|---|---|---|---|---|---|
| 5 | gleiche wie in Beispiel 1 | Polyvinylalkohol | 5 | 81 | 26 000 | 13 | 5200 |
| 6 | dto. | " | 10 | 79 | 28 000 | 10 | 5200 |
| 7 | Organopolysiloxan der Summenformel $CH_3Si(OCH_3)_{0,8}O_{1,1}$ 3) | " | 10 | 81 | 26 000 | 10 | 5200 |
| 8 | dto. | " | 10 | 79 | 28 000 | 10 | 5200 |
| 9 | durch Trimethylsiloxygruppen endblockiertes Methylhydrogenpolysiloxan mit einer Viskosität von 20 $mm^2 \cdot s^{-1}$ bei 25°C | " | 10 | 81 | 26 000 | 10 | 5200 |
| 10 | 3-Mercaptopropyltrimethoxysilan | " | 10 | 81 | 26 000 | 10 | 5200 |
| 11 | Silan der Formel $CH_2=CHSi[OCH(CH_3)-CH_2OCH_3]_3$ | " | 10 | 79 | 26 000 | 20 | 1600 |
| 12 | gamma-Methacryloxypropyltris-(ethoxyethylenoxy)-silan | " | 20 | 81 | 26 000 | 10 | 2000 |
| 13 | dto. | " | 20 | 87,5 | 25 000 | 20 | 5200 |
| 14 | gleiche wie in Beispiel 1 | " | 10 | 79 | 28 000 | 10 | 5200 |
| 15 | n-Octyltrimethoxysilan | 4) +0,5 Gew.-% Natriumsulfonat von aliphatischen Alkoholen mit etwa 13 Kohlenstoffatomen | 35 | - | - | 35 | 5200 |

1) bezogen auf das Gesamtgewicht von wasserlöslichem Polymer und Siliciumverbindung

2) Gewichtsprozent Polymer, bezogen auf das Gesamtgewicht der wäßrigen Lösung, in deren Form das wasserlösliche Polymer eingesetzt wird

3) im Handel erhältlich, durchschnittliches Molekulargewicht: etwa 650 g/Mol Viskosität: etwa 30 $mm^2.s^{-1}$ bei 25°C

4) "Gelbdextrin D 3100, dünnkochend" ein Kartoffelstärkeprodukte, erhältlich bei der Fa. Avebe-Amylum Deutschland GmbH, 4000 Düsseldorf 1, BRD. Die 0,5 Gew.-% beziehen sich auf das Gesamtgewicht von wasserlöslichem Polymer und Siliciumverbindung.

## Patentansprüche

**1.** In Wasser redispergierbare Pulver, erhältlich durch Sprühtrocknung wäßriger Mischungen, wobei die Mischungen
a) mindestens 30 Gewichtsprozent, bezogen auf das Gesamtgewicht des jeweiligen wasserfreien Pulvers, mindestens einer organischen Siliciumverbindung, wobei mindestens 50 Gewichtsprozent der organischen Siliciumverbindungen einen Siedepunkt von mindestens 150°C bei 1020 hPa (abs.), durchschnittlich höchstens 1,8 SiC-gebundene organische Reste je Siliciumatom und je Molekül mindestens ein direkt an Silicium gebundenes Wasserstoffatom und/oder mindestens eine direkt an Silicium gebundene Hydroxylgruppe und/oder mindestens einen über Sauerstoff an Silicium gebundenen Kohlenwasserstoffrest, der durch eine Alkoxygruppe substituiert sein kann. und
b) 5 bis 50 Gewichtsprozent, bezogen auf das Gesamtgewicht der organischen Siliciumverbindung, wasserlösliches Polymer enthalten.

**2.** Verfahren zur Herstellung von in Wasser redispergierbaren, wasserlösliches Polymer und mindestens eine organische Siliciumverbindung enthaltenden Pulvern, wobei Emulsionen oder Suspensionen von organischer Siliciumverbindung, die zu mindestens 50 Gewichtsprozent aus solcher organischer Siliciumverbindung besteht, die einen Siedepunkt von mindestens 150°C bei 1020 hPa (abs.), durchschnittlich höchstens 1,8 SiC-gebundene organische Reste je Siliciumatom und je Molekül mindestens ein direkt an Silicium gebundenes Wasserstoffatom und/oder mindestens eine direkt an Silicium gebundene Hydroxylgruppe und/oder mindestens einen über Sauerstoff an Silicium gebundenen Kohlenwasserstoffrest, der durch eine Alkoxygruppe substituiert sein kann, in Wasser, das wasserlösliches Polymer enthält, wobei die Menge von in Wasser dispergierter organischer Siliciumverbindung insgesamt mindestens 30 Gewichtsprozent, bezogen auf das Gesamtgewicht der im Wasser verteilten, bei 1020 hPa (abs.) und Temperaturen unter 150°C nicht-siedenden Stoffe, beträgt, und wobei wasserlösliches Polymer in Mengen von 5 bis 50 Gewichtsprozent, bezogen auf das Gewicht von zur Herstellung des jeweiligen Pulvers eingesetzter Organosiliciumverbindung verwendet wird, in an sich bekannter Weise sprühgetrocknet werden.

**3.** Verwendung der Pulver nach Anspruch 1 oder der nach Anspruch 2 hergestellten Pulver als Zusätze zu Putzen, hydraulischen Bindemitteln, Lehm oder Anstrichfarben.

**4.** Verwendung der Pulver nach Anspruch 1 oder der nach Anspruch 2 hergestellten Pulver in mit Wasser verdünnter Form zur Hydrophobierung von Schüttgütern.

**5.** Verwendung der Pulver nach Anspruch 1 oder der nach Anspruch 2 hergestellten Pulver in mit Wasser verdünnter Form als Bindemittel für feinteilige anorganische oder organische Stoffe.

**Claims**

**1.** Powders that are redispersible in water and obtainable by spray-drying agueous mixtures, the mixtures containing

a) at least 30 per cent by weight, based on the total weight of the respective anhydrous powder, of at least one organic silicon compound, at least 50 per cent by weight of the organic silicon compounds having a boiling point of at least 150 °C at 1020 hPa (abs.), and containing on average not more than 1.8 SiC-bonded organic radicals per silicon atom and, per molecule, at least one hydrogen atom that is bonded directly to silicon, and/or at least one hydroxyl group that is bonded directly to silicon, and/or at least one hydrocarbon radical that is bonded to silicon via oxygen and may be substituted by an alkoxy group, and

b) 5 to 50 per cent by weight, based on the total weight of the organic silicon compound of water-soluble polymer.

**2.** Process for the manufacture of powders that are redispersible in water and contain a water-soluble polymer and at least one organic silicon compound by spray-drying, in which emulsions or suspensions of organic silicon compound comprising at least 50 per cent by weight of organic silicon compound that has a boiling point of at least 150 °C at 1 020 hPa (abs.), and contains on average not more than 1.8 SiC-bonded organic radicals per silicon atom and, per molecule, at least one hydrogen atom that is bonded directly to silicon, and/or at least one hydroxyl group that is bonded directly to silicon, and/or at least one hydrocarbon radical that is bonded to silicon via oxygen and may be substituted by an alkoxy group, in water that contains water-soluble polymer, the amount of organic silicon compound dispersed in water being, in total, at least 30 per cent by weight, based on the total weight of the substances dispersed in water that do not boil at 1020 hPa (abs.) and temperatures below 150 °C, the water-soluble polymer being used in amounts of 5 to 50 per cent by weight, based on the weight of the organosilicon compound employed for the manufacture of the respective powder, are spray-dried in a manner known per se.

**3.** Use of the powders according to Claim 1 or of the powders manufactured according to Claim 2 as additives to plasters, hydraulic binders, clay or paints.

**4.** Use of the powders according to Claim 1 or of the powders manufactured according to Claim 2, when diluted with water, for rendering bulk materials hydrophobic.

**5.** Use of the powders according to Claim 1 or of the powders manufactured according to Claim 2, when diluted with water, as binders for finely divided inorganic or organic materials.

**Revendications**

**1.** Poudres pouvant être redispersées dans l'eau, et qui peuvent être obtenues par séchage par pulvérisation de mélanges aqueux, les mélanges contenant

a) au moins 30 % en masse, par rapport à la masse totale de la poudre anhydre correspondante, d'au moins un composé organique du silicium, où au moins 50 % en masse des composés organiques du silicium ont un point d'ébullition d'au moins 150 °C à 1020 hPa (abs.), au plus 1,8 restes organiques liés par une liaison SiC en moyenne par atome de silicium, et, par molécule, au moins un atome d'hydrogène lié directement au silicium et/ou au moins un groupe hydroxyle lié directement au silicium et/ou au moins un reste hydrocarboné, pouvant être substitué par un groupe alcoxy, lié au silicium par l'intermédiaire d'un atome d'oxygène, et

b) 5 à 50 % en masse, par rapport à la masse totale du composé organique du silicium, d'un polymère soluble dans l'eau.

**2.** Procédé de préparation de poudres pouvant être redispersées dans l'eau et contenant un polymère soluble dans l'eau et au moins un composé organique du silicium, selon lequel on sèche par pulvérisation de façon cornue en soi des émulsions ou des suspensions, dans de l'eau qui contient un polymère soluble dans l'eau, d'un composé organique du silicium constitué à au moins 50 % en masse

d'un composé organique du silicium qui a un point d'ébullition d'au moins 150 ° C à 1020 hPa (abs.), au plus 1,8 restes organiques liés par une liaison SiC en moyenne par atome de silicium, et, par molécule, au moins un atome d'hydrogène lié directement au silicium et/ou au moins un groupe hydroxyle lié directement au silicium et/ou au moins un reste hydrocarboné, pouvant être substitué par un groupe alcoxy, lié au silicium par l'intermédiaire d'un atome d'oxygène, la quantité de composé organique du silicium dispersé dans l'eau étant en tout d'au moins 30 % en masse par rapport à la masse totale des produits dispersés dans l'eau ne bouillant pas à des températures inférieures à 150 ° C sous 1020 hPa (abs), et la quantité utilisée de polymère soluble dans l'eau étant de 5 à 50 % en masse par rapport à la masse du composé d'organosilicium utilisé pour la préparation de la poudre correspondante.

**3.** Utilisation des poudres selon la revendication 1 ou des poudres préparées selon la revendication 2 comme additifs pour des enduits, des liants hydrauliques, de l'argile ou des peintures.

**4.** Utilisation des poudres selon la revendication 1 ou des poudres préparées selon la revendication 2 sous forme diluée dans l'eau pour rendre hydrophobes des produits en vrac.

**5.** Utilisation des poudres selon la revendication 1 ou des poudres préparées selon la revendication 2 sous forme diluée dans l'eau comme liants pour des matières inorganiques ou organiques finement divisées.